# FASCICULE DE BREVET EUROPEEN

(11) **EP 2 258 825 B1**
(45) Date de publication et mention de la délivrance du brevet: **22.11.2017**
(21) Numéro de dépôt: 10290291.3
(22) Date de dépôt: 03.06.2010
(51) Int. Cl.: C12C 1/027, C12C 1/15

(54) **Cuve de germination à déchargement optimisé**
Keimkasten mit verbesserter Ausbringung
Germination container with optimised unloading

(30) Priorité: 04.06.2009 FR 0902698
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- EP-A2- 0 714 979
- DE-A1- 1 442 174
- DE-A1- 1 801 547
- DE-A1- 2 746 314
- DE-A1- 2 847 458
- DE-C1- 3 050 671
- DE-C1- 3 151 483
- GB-A- 1 487 824
- GB-A- 1 538 177
- US-A- 3 840 435

## Description

L'invention a trait au domaine technique du maltage et plus particulièrement à un germoir, c'est-à-dire un dispositif pour faire germer du grain.

Lors du maltage, on cherche à reproduire le développement naturel de la germination d'une céréale, afin que celle-ci développe certaines enzymes, telles que l'amylase. La céréale utilisée comprend généralement l'orge, le seigle, le sorgho, le blé ou l'épeautre.

Le maltage comprend le traitement de la céréale par une succession d'opérations, après quoi on obtient du malt.

Il existe de gros besoins en malt, de différentes propriétés et qualités selon le domaine d'utilisation. Le brassage par exemple nécessite un malt adapté et conditionné pour la fabrication de la bière.

Les principes généraux du maltage sont quasi ancestraux. On en trouve une synthèse dans l'ouvrage "Malterie et Brasserie", de Jean SUNIER, 2ème édition, imprimerie La Concorde, Lausanne, 1968, ou encore dans sa réédition plus récente sous le nouveau titre "La Fabrication de la Bière", Alliage éditeur, 26 septembre 2007, ISBN-13 No. 978-2921327602.

Aujourd'hui, le maltage est réalisé industriellement, dans des installations appelées malteries. Une malterie a pour objet la mise en oeuvre d'un procédé de production automatisé qui procure un excellent rendement en qualité et quantité, tout en réduisant les coûts d'investissement, de fonctionnement et de fabrication : emprise de terrain, génie civil de construction, besoins en énergie, notamment.

De façon générale, une telle installation comporte au moins les éléments suivants :
- un dispositif de trempage pour réaliser une opération de trempage du grain,
- au moins un germoir pour réaliser une opération de germination du grain trempé,
- au moins une touraille pour une opération de touraillage, et
- un système de transport du grain de l'un à l'autre de ces éléments.

Chacun de ces éléments est lié à des conditions opératoires strictes. En effet, les exigences de températures, de temps d'exposition et d'hygiène sont considérables. Des contraintes de coûts existent également. Le respect de ces exigences et contraintes nécessite une surveillance constante des différents éléments de la malterie, mais aussi une conception ingénieuse de la malterie afin d'optimiser la production de malt. Les malteries doivent en outre s'efforcer de réunir les conditions et besoins requis par l'industrie alimentaire, notamment pour assurer une production de malt qui réponde aux besoins de consommation.

US 3 840 435 A divulgue un appareil pour réaliser du malt d'orge comprenant un compartiment de germination allongé. Pour retirer le malt d'orge du compartiment de germination, le plancher de celui-ci présente une ouverture centrale s'étendant longitudinalement. Une pluralité de paires de portes sont montées à pivotement sur le plancher pour ouvrir et fermer l'ouverture centrale de celui-ci. En position ouverte, l'ouverture centrale permet le passage du malt contenu dans le compartiment à un convoyeur.

DE 27 46 314 A1 divulgue un conteneur de germination et une vis sans fin disposée en travers de celui-ci. Lorsqu'elle est mise en rotation, la vis amène la matière germée jusqu'à une ouverture ménagée dans la claie du conteneur. Cette ouverture, située sur un bord extérieur de la claie, peut être fermée au moyen d'un volet et être ouverte pour le déchargement du conteneur.

La présente invention vient améliorer la situation.
Le dispositif proposé vise un germoir du type comprenant un bac de germination comprenant un plancher surélevé et de parois latérales entourant le plancher surélevé et un dispositif de déchargement du grain, remarquable en ce que le dispositif déchargement comprend au moins un premier organe de transport à vis sans fin pour le grain en affleurement du dessus du plancher surélevé, que ce plancher surélevé présente une ou plusieurs portions à basculement commandable, reliées chacune à au moins une portion fixe du plancher surélevé par des moyens de pivotement actionnables, au moins une portion à basculement commandable étant partiellement disposée sous la vis sans fin du premier organe de transport, tandis que le dispositif de déchargement comprend en outre au moins un second organe de transport pour le grain, disposé sous cette portion à basculement commandable, et en ce qu'une ou plusieurs des portions à basculement commandable sont prévues le long de chacune des parois latérales transversales et le long de l'une au moins des parois latérales longitudinales.

Un tel germoir permet de procéder de manière aisée et efficace au déchargement du grain germé. En particulier, ce déchargement peut être réalisé de manière totalement automatisée, pratiquement sans intervention d'un opérateur humain dans le germoir, ou du moins en réduisant au minimum de telles interventions. Un avantage supplémentaire, lié à l'utilisation d'un tel germoir, réside dans le fait que celui-ci permet un déchargement complet du bac de germination, c'est-à-dire sans reste significatif de grain, sans nécessité d'une intervention manuelle. Le germoir en question permet d'acheminer rapidement et simplement le grain déchargé vers le poste suivant, à savoir la touraille.

Des caractéristiques supplémentaires de l'invention, complémentaires ou de substitution sont énoncées ci-après.
- Le premier organe de transport est à positionnement variable par rapport au bac de germination, et le plancher surélevé présente pour chacune des positions relative du premier organe de transport au moins une portion à basculement commandable disposée sous la vis sans fin de ce premier organe.
- Le premier organe de transport est supporté avec possibilité de coulissement par rapport au bac de germination.
- Au moins un second organe de transport est disposé sous chaque portion à basculement commandable.
- Certaines au moins des portions à basculement commandable sont alignées, et un même second organe de transport est disposé sous chacune des portions à basculement commandable de cet alignement.
- Le bac de germination présente un plancher surélevé généralement rectangulaire, et la vis sans fin du premier organe de transport est disposée suivant une direction transversale du plancher surélevé.
- L'une au moins des portions à basculement commandable est adjacente à une paroi latérale du bac de germination.
- Le plancher surélevé présente en outre une portion à basculement commandable supplémentaire disposée le long de l'une au moins des parois latérales.
- Le dispositif de déchargement comprend un troisième organe de transport de grain, disposé sous la portion à basculement commandable supplémentaire.
- Le plancher surélevé est généralement rectangulaire, et une ou plusieurs portions à basculement commandable sont prévues le long de chacune des parois latérales transversales.
- Le plancher surélevé comprend une pluralité d'éléments de plancher formant dalles, et chaque portion à basculement commandable est également conformée en une dalle de plancher.
- Chaque portion à basculement commandable est reliée à au moins une portion fixe du plancher surélevé par des moyens de pivotement actionnables.
- Les moyens de pivotement actionnables comprennent un vérin à actionnement commandable, une liaison pivot entre la portion à basculement commandable et une partie fixe du plancher surélevé, et une bielle montée entre ledit vérin et la portion à basculement commandable.
- L'un au moins du second organe de transport et du troisième organe de transport est intégralement logé dans un étui profilé de manière aérodynamique.
- Ledit étui est profilé vis à vis d'un flux d'air destiné à être soufflé sous le plancher surélevé (3) et sur la longueur de ce plancher surélevé (3).
- Le premier organe de transport comprend une vis sans fin qui est suspendue à un pont roulant par l'intermédiaire d'une structure de pantographe verrouillable.
- Ladite structure de pantographe verrouillable comprend au moins deux bras articulés, chacun de ces bras articulés étant fixé avec possibilité de pivotement à ces extrémités avec le pont roulant (35) d'une part et avec la vis sans vis d'autre part.
- Le germoir comprend en outre un organe de retournement de grain.
- L'organe de retournement de grain comporte une ou plusieurs vis sans fin, s'étendant verticalement du plancher à une structure de suspension mobile par rapport à la cuve de germination.
- La cuve de germination présente une allure généralement rectangulaire, et l'organe de retournement de grain présente une pluralité de vis sans fin disposés alignées et également réparties sur l'ensemble de la largeur de la cuve de germination.
- Des parois latérales transversales de la cuve de germination présentent respectivement des niches agencées de manière à loger au moins partiellement chacune des vis sans fin.
- Une portion à basculement commandable est disposée sous chacune des niches.

D'autres caractéristiques et avantages de l'invention apparaîtront à l'examen de la description détaillée ci-après, et des dessins annexés, sur lesquels :
- la figure 1 est une vue de dessus d'un bac de germination pour le germoir selon l'invention,
- la figure 2 est une vue en coupe transversale, suivant une ligne II-II, du bac de germination de la figure 1,
- la figure 3 est une vue en coupe longitudinale, suivant une ligne III-III, du bac de germination de la figure 1,
- la figure 4 est une vue agrandie d'un détail IV de la figure 2,
- la figure 5 est une vue de face d'une partie d'un dispositif d'évacuation de grains pour le germoir selon l'invention, montrant une vis de déchargement dans un premier état de fonctionnement et dans un second état de fonctionnement,
- la figure 6 est une vue en coupe transversale de la partie du dispositif de la figure 5, la vis de déchargement étant dans le second état de fonctionnement,
- la figure 7 est une vue de droite de la partie du dispositif de la figure 5,
- la figure 8 est une vue de gauche de la partie du dispositif de la figure 5,
- la figure 9 est analogue à la figure 2 et montre en plus un dispositif de transport de grain à usage dans le germoir selon l'invention, et
- la figure 10 montre un mode de réalisation avantageux du germoir selon l'invention à partir d'un détail d'une vue analogue à la figure 3.

Les dessins comprennent pour l'essentiel des éléments de caractère certain. Ils pourront donc non seulement servir à mieux faire comprendre la description, mais aussi contribuer à la définition de l'invention, le cas échéant.

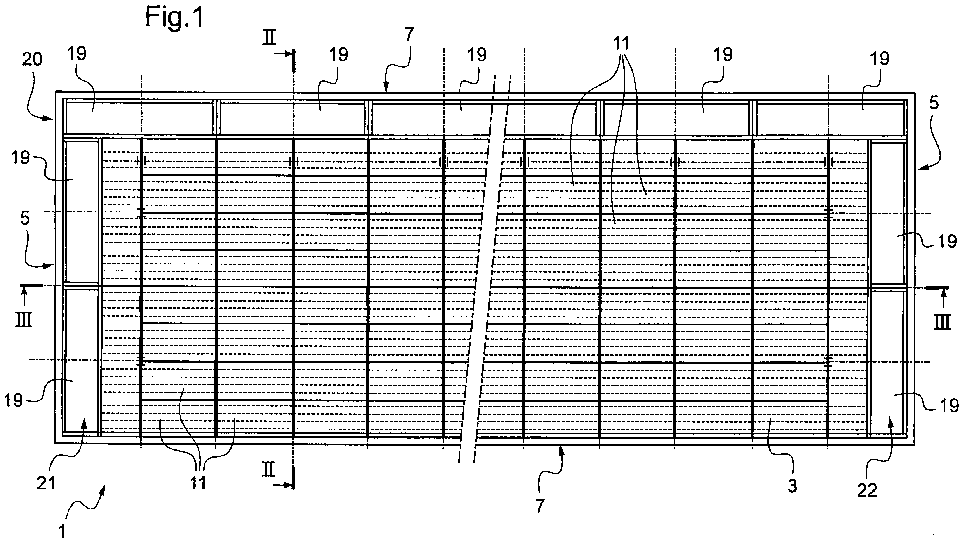

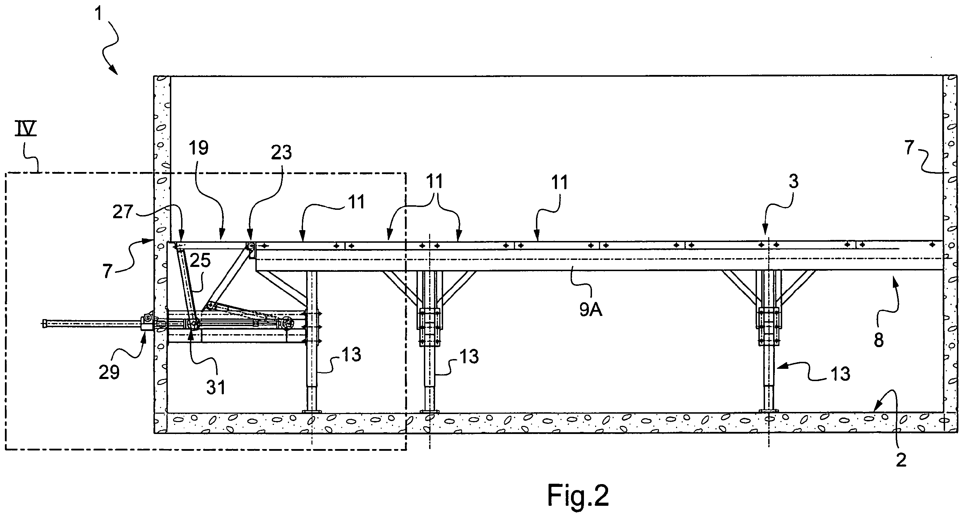

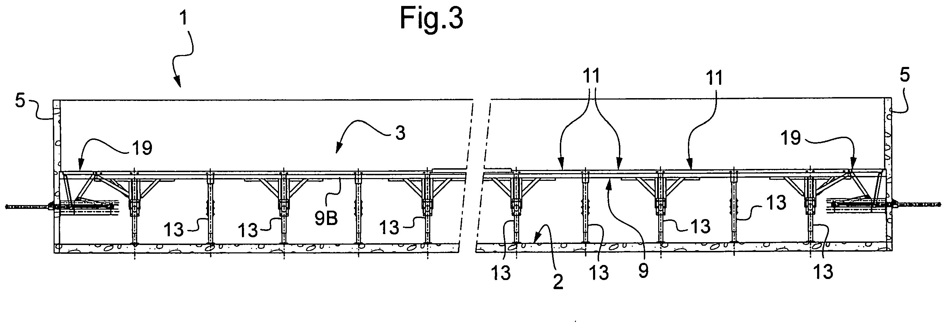

Les figures 1 à 3 illustrent un bac de germination 1.

Le bac de germination 1 comprend un fond 2, bordé de parois latérales, à savoir deux parois longitudinales 7, en regard l'une à l'autre, et deux parois transversales 5 se raccordant respectivement à une extrémité de chacune des parois longitudinales 7.

Le bac de germination 1 comprend encore un plancher 3, surélevé par rapport au fond 2, et qui s'étend sur l'ensemble du bac de germination 1, c'est-à-dire d'une paroi longitudinale 7 à l'autre paroi longitudinale 7 et d'une paroi latérale 5 à l'autre paroi latérale 5. Par exemple, le plancher 3 est disposé approximativement 2 mètres au-dessus du fond 2.

Le plancher 3 comporte un ensemble de dalles de plancher, ou panneaux, reposant sur une structure de soutien 8, laquelle structure est en appui sur le fond 2.

L'ensemble des panneaux du plancher 3 comporte des panneaux montés fixement par rapport à la structure de soutien 8, ou panneaux fixes 11, et des panneaux montés avec possibilité de basculement par rapport à cette structure de soutien 8, ou panneaux basculants 19.

La structure de soutien 8, ou armature, comprend un ensemble de poutrelles métalliques sur lesquelles reposent les panneaux fixes 11.

Plus précisément, la structure de soutien 8 comprend des poutrelles métalliques 9 disposées de manière à s'étendre suivant la direction transversale du bac de germination 1, ou poutrelles transversales 9A. Les poutrelles transversales 9A sont disposées parallèlement les unes aux autres, régulièrement espacées les unes des autres suivant la direction longitudinale du bac de germination 1.

Chacune des poutrelles transversales 9A peut être encastrée à l'une de ses extrémités dans la même paroi transversale 5 et est supportée au voisinage de son extrémité opposée par un pied de maintien 13 en appui sur le fond 2.

Ici, chacune des poutrelles transversales 9A est maintenue par trois pieds de maintien 13. Par exemple, un premier pied de maintien 13 est disposé à environ deux mètres de l'une des parois longitudinales 7, un second pied de maintien 13 est disposé à environ quatre mètres du premier pied de maintien 13 et un troisième pied de maintien est disposé à environ un mètre soixante dix de l'autre paroi longitudinale 7.

Le fond 2 prend ici la forme d'une chape de béton coulée au sol. En option, le fond 2 peut être agencé de manière à présenter une légère pente (par exemple de l'ordre de 1%) en direction d'une rigole (non représentée) pour l'évacuation de liquides de nettoyage/désinfection.

La structure de soutien 8 comprend encore des poutrelles métalliques disposées de manière à s'étendre suivant la direction longitudinale du bac de germination 1, ou poutrelles longitudinales 9B.

Les poutrelles longitudinales 9B sont disposées parallèlement les unes aux autres, régulièrement espacées suivant la direction transversale du bac de germination 1.

Chaque poutrelle longitudinale 9B est soutenue, en plusieurs lieux régulièrement répartis sur l'ensemble de sa longueur, par des pieds de maintien 13.

Par exemple, deux pieds de maintien 13 adjacents, soutenant une même poutrelle longitudinale 9B, peuvent être distant l'un de l'autre de deux mètres environ.

Les poutrelles longitudinales 9B et les poutrelles transversales 9A présentent des faces supérieures sensiblement à un même niveau.

Ici, chaque poutrelle longitudinale 9B est conformée en plusieurs segments distincts, chaque segment étant destiné à s'intercaler entre deux poutrelles transversales 9A adjacentes.

Par exemple, chaque segment de chacune des poutrelles longitudinales peut être maintenu par deux pieds de maintien 13 soutenant également deux poutrelles transversales 9A adjacentes.

Chacune de ces poutrelles transversales 9A pourraient, en remplacement ou en complément, être également conformées en plusieurs segments. Dans ce cas, chacun des ces segments pourrait être maintenu par deux pieds de maintien 13.

Dans certains cas particulier, et selon la masse de grain à recevoir, on pourrait imaginer se passer de certaines au moins des poutrelles transversales 9A ou longitudinales 9B.

Les panneaux fixes 11 et les panneaux basculants 19 présentent une grille très fine sur laquelle les grains en germination sont destinés à reposer, et au travers de laquelle de l'air climatisé peut circuler.

Chacun de ces panneaux peut par exemple comprendre une pluralité de barres supérieures et une pluralité de barres inférieures croisant ces barres supérieures. Les barres supérieures peuvent être fixées aux barres inférieures par un point de soudure ou un cordon de soudure. Les barres supérieures peuvent être disposées dans un plan sensiblement horizontal, parallèlement les unes aux autres. Les barres supérieures peuvent présenter une section transversale en forme de triangle isocèle, par exemple équilatéral. Le sommet du triangle peut alors être dirigé vers le bas, c'est-à-dire vers les barres inférieures. Chaque barre supérieure peut comprendre une surface supérieure correspondant à la base du triangle et deux surfaces latérales inférieures se rejoignant en direction de la barre inférieure. La longueur de la base du triangle peut être choisie notamment en fonction de l'espacement entre deux barres supérieures adjacentes de telle sorte que le taux d'ouverture d'une grille soit supérieur à 30 % préférablement à 40 %.

Les panneaux fixes 11 présentent une même allure générale rectangulaire et plate.

Les panneaux basculants 19 présentent une même allure générale rectangulaire et plate.

Chacun des panneaux basculants 19 présente une longueur sensiblement supérieure à la longueur des panneaux fixes 11.

Ici, chaque panneau basculant 19 présente une longueur a peu près égale à deux fois la longueur d'un panneau fixe 11.

En option, la largeur d'un panneau basculant 19 est voisine de la largeur d'un panneau fixe 11.

Encore en option, la longueur d'un panneau fixe 11 vaut approximativement le double de la largeur de ce panneau fixe 11.

Par exemple, les panneaux fixes 11 peuvent présenter une longueur voisine de deux mètres.

Des panneaux basculants 19 sont disposés les uns à la suite des autres, suivant leur direction longitudinale et suivant la direction longitudinale du bac de germination 1, en un premier alignement de manière à former un bord longitudinal 20 du plancher 3.

Plus précisément, chaque panneau basculant 19 du bord longitudinal 20 présente un bord longitudinal adjacent à des bords longitudinaux de deux panneaux fixes 11, et un bord longitudinal opposé qui vient en contact avec la même parois longitudinale 7, à l'exception des panneaux basculants 19 disposés à l'extrémité du bord longitudinal 20.

Des panneaux basculants 19 sont encore disposés de manière alignée les uns à la suite des autres, suivant leur direction longitudinale et suivant la direction transversale du bac de germination 1, en un premier alignement de manière à former un premier bord transversal 21 du plancher 3 et en un second alignement de manière à former un second bord transversal 22 du plancher 3.

Plus précisément, chaque panneau basculant 19 du premier bord transversal 21 et du second bord transversal 22 présente un bord longitudinal adjacent à deux panneaux fixes 11 et un bord longitudinal opposé qui vient en contact avec l'une des parois transversales 5.

Les panneaux fixes 11 adjacents aux panneaux basculants 19 du premier 21 ou du second 22 bord longitudinal sont disposés transversalement aux autres panneaux fixes 11 du plancher 3. Autrement dit, chacun de ces panneaux fixes 11 en question présente un bord longitudinal opposé au bord longitudinal adjacent à un panneau basculant 19 qui est adjacent au côté transversal de deux panneaux fixes 11.

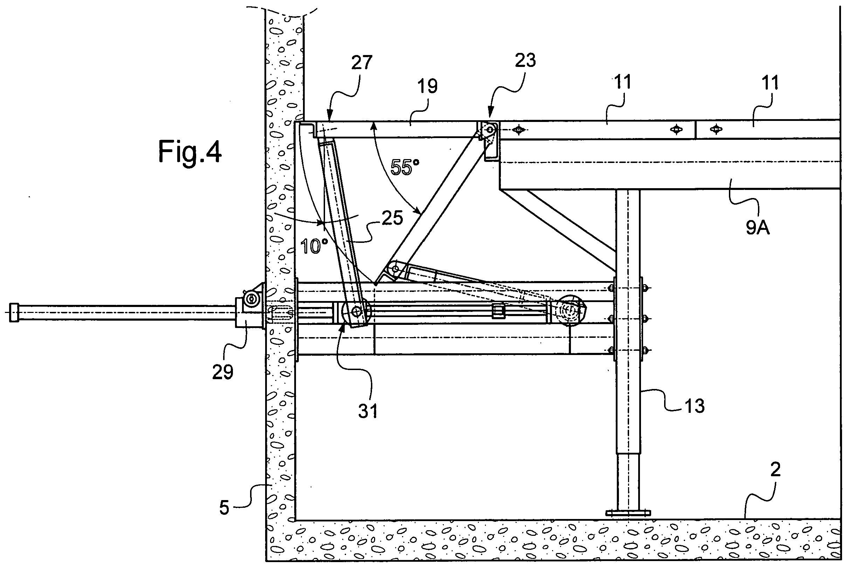

La figure 4 montre que chaque panneau basculant 19 du premier bord transversal 21 présente une face supérieure qui vient en butée, sur une zone voisine du bord longitudinal correspondant, avec un épaulement ménagé dans la paroi transversale 5 correspondante. Il en est de même des panneaux basculants 19 du second bord transversal 22 et des panneaux basculants 19 du bord longitudinal 20 par rapport aux parois longitudinales 7.

Cette butée peut faire intervenir un profilé en "L", fixé sur le bord longitudinal correspondant du panneau basculant 19 par l'intermédiaire de la base du "L", dont la branche du "L" perpendiculaire à la base vient s'appuyer contre l'épaulement ménagé dans la paroi transversale 5 correspondante.

Une jonction étanche aux grains est ainsi réalisée entre le plancher surélevé 3 et l'ensemble des parois latérales transversales 5 et longitudinale 7.

Comme le montre la figure 4, chaque panneau basculant 19 est monté de manière pivotante sur les panneaux fixes 11 adjacents par l'intermédiaire d'une liaison pivot 23.

Chacun des panneaux basculants 19 est relié à une bielle 25 par l'intermédiaire d'une seconde liaison pivot 27. Cette seconde liaison pivot 27 est disposée sensiblement au milieu du bord longitudinal du panneaux basculants 19 éloigné des panneaux fixes 11 adjacents. Chaque bielle 25 est reliée à son extrémité opposée au panneau basculant 19 à la tige d'un vérin 29 par l'intermédiaire d'une troisième liaison pivot 31.

L'ensemble de ces éléments forme une structure de pantographe, c'est-à-dire une structure mécaniquement bloquée en position, indépendamment de l'action du vérin 29, qui se trouve débloquée par l'actionnement du vérin en question.

Par exemple, dans la position bloquée, la bielle 25 s'étend suivant un angle d'environ 10° par rapport à la verticale, la bielle 25 étant disposé du même côté de cette verticale que le panneau fixe 11 adjacent au panneau basculant 19 correspondant.

Tout panneau basculant 19 se trouve en position fermée lorsque le pantographe en question se trouve en position bloquée. Ceci est avantageux en terme de sécurité puisqu'un dysfonctionnement du vérin 29 ou de son actionneur n'aura pas pour conséquence l'ouverture du panneau basculant 19.

Le vérin 29 est monté sur la paroi latérale 5 correspondante et traverse cette dernière. L'actionneur du vérin est ainsi disposé à l'extérieur de la cuve de germination, ce qui est optimal en termes d'ambiance, de conditions sanitaires et de maintenance.

L'actionnement d'un vérin 29 provoque un basculement vers le bas du panneau basculant 19 correspondant par rapport au reste du plancher 3. Le grain supporté par ce panneau 19 tombe alors sous le plancher 3. Autrement dit, une ouverture est créée dans le plancher 3, par laquelle peut être déchargé du grain. Selon l'actionnement du vérin 29, le basculement du panneau basculant 19 peut être progressif ou brutal.

Par exemple, il est prévu un débattement d'environ 55° entre la position bloquée d'un panneau basculant 19 et la position ouverte de ce panneau 19.

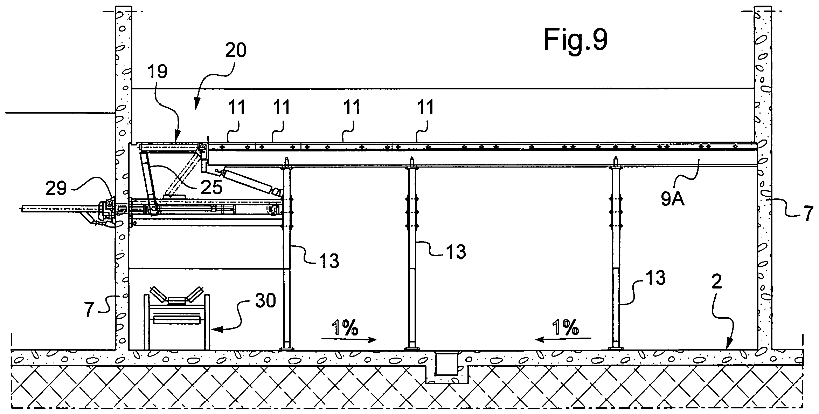

La figure 9 montre qu'un même dispositif de transport de grains peut être disposé sous chacun panneaux basculants 19 du bord longitudinal 20.

Ici, ce dispositif de transport de grains 3 prend la forme d'un convoyeur à bande 30 s'étendant sous chacun panneaux basculants 19 du bord longitudinal 20 et reposant sur le fond 2 de la cuve de germination 1.

D'autres formes de dispositifs de transports peuvent être utilisés en remplacement du convoyeur à bande 30.

Chacun des panneaux basculants 19 du premier bord transversal 21 et du second bord transversal 22 est monté par rapport aux panneaux fixes 11 adjacents au moyen d'un dispositif à vérin analogue à celui décrit en liaison avec la figure 4.

Un dispositif de transport de grains (non représenté) peut être disposé sous chacun des panneaux basculants 19 du premier bord transversal 21. Et un dispositif de transport de grains (non représenté) peut également être disposé sous chacun des panneaux basculants 19 du second bord transversal 22.

De préférence, un même dispositif de transport, ou second dispositif de transport, est utilisé pour l'ensemble des panneaux basculant 19 disposés de manière adjacente à une même paroi transversale 5.

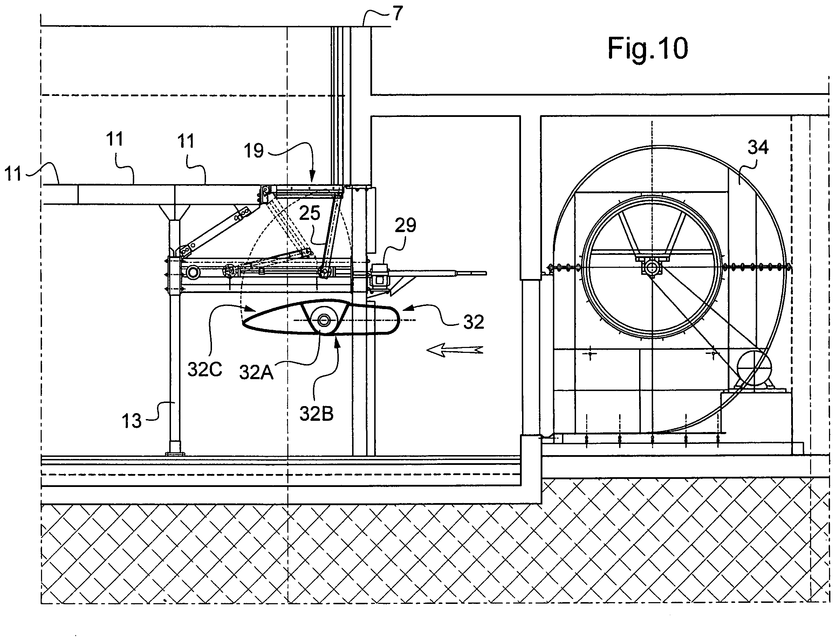

La figure 10 montre qu'un tel second dispositif de transport peut prendre la forme d'un organe à vis sans fin 32. L'une des extrémités de cet organe à vis sans fin 32 peut être agencé de manière à surplomber la bande d'un transporteur pour le bord longitudinal 20.

L'organe à vis sans fin 32 comprend une vis sans fin 32A qui est logée dans un étui profilé 32B de forme aérodynamiquement profilée.

Cette forme aérodynamique est telle que le flux d'air soufflé par un dispositif de soufflerie 34 en amont de l'étui profilé 32B ne se retrouve pas perturbé en aval de cet étui du fait de la présence de la vis sans fin 32A. Autrement dit, le flux d'air est pratiquement identique en amont de l'étui profilé 32B et en aval de celui-ci. Ceci garantit un flux d'air non perturbé, ou aérodynamiquement stabilisé, sur la longueur du germoir, ce qui permet d'obtenir une ventilation homogène des grains dans le germoir. En particulier, ce flux d'air est pratiquement rectiligne et dirigé suivant la longueur du germoir. En option, de fins ailerons peuvent faire saillie de la surface extérieur de l'étui profilé 32B, lesquels ailerons s'étendent suivant la direction souhaitée du flux. Les ailerons sont disposés les uns à coté des autres selon la direction longitudinale de l'étui 32B, pour séparer le flux d'air en plusieurs flux, ou couloirs, et éviter les perturbations qui pourraient survenir dans le flux d'air au contact de l'étui 32B.

L'étui profilé 32B présente une portion mobile 32C, montée pivotante par rapport au reste de l'étui profilé 32B et dont l'axe de rotation est parallèle à l'axe longitudinal de l'étui. Le pivotement de la portion mobile 32C, ici vers le haut, fait apparaître la vis sans fin 32A et permet la réception du grain. Le déchargement du grain se fait lorsque le dispositif de soufflerie 34 est arrêté.

La forme aérodynamique peut en outre être agencée de manière que le flux d'air soit séparé en deux flux d'air et soit recréé en aval de l'étui, sans turbulences. En option, des arêtes peuvent être prévues qui font verticalement saillie de la partie supérieure de l'étui. Ces arêtes séparent des couloirs d'air et favorisent la stabilisation du flux d'air.

De l'air climatisé est utilisé pour favoriser la germination des grains. Cet air climatisé pénètre dans le bac de germination au travers des grilles des panneaux du plancher 3.

Bien que non représenté, un dispositif à vis sans fin 32 est de préférence également disposé sous le second bord transversal 22 pour l'évacuation et le transport du grain germé. Ce dispositif peut être muni d'un étui profilé 32A ou non, suivant notamment que le flux d'air aval a vocation ou non à atteindre une autre cuve de germination, adjacente.

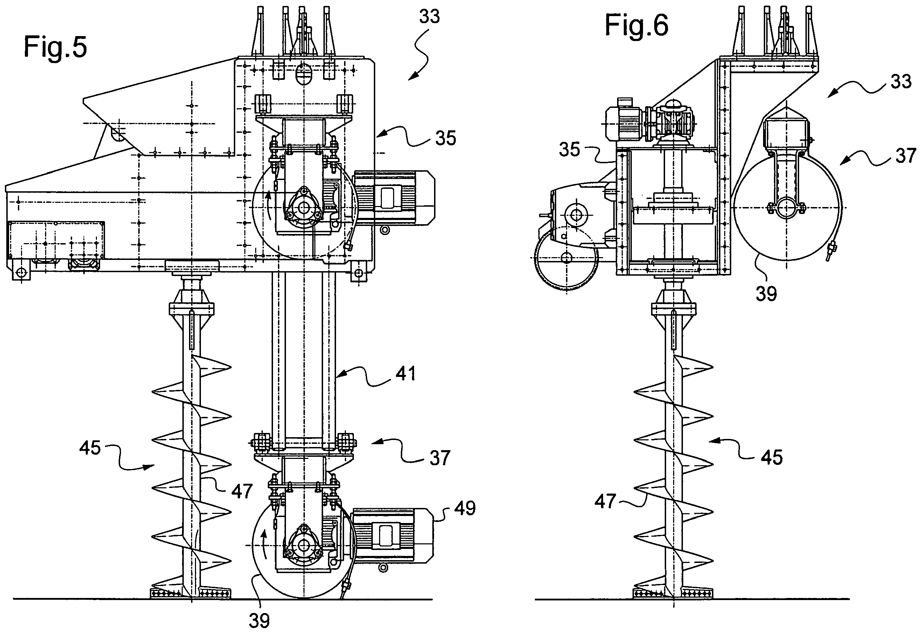

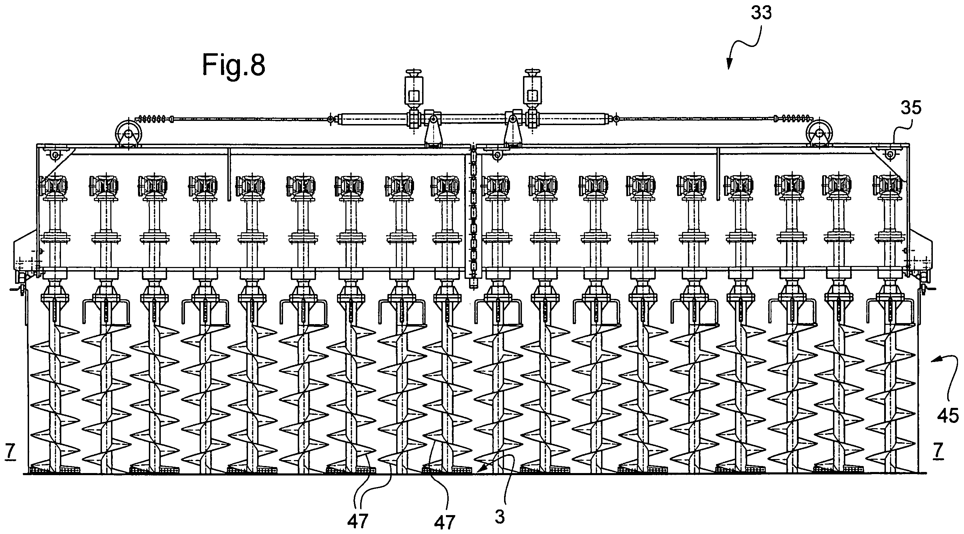

Les figures 5 à 8 montrent un dispositif de retournement et de déchargement 33 de grain à usage avec le bac de germination 1 pour former un ensemble fonctionnel de type germoir.

Le dispositif de retournement et de déchargement 33 comprend un pont roulant 35 en appui sur chacune des parois longitudinales 7 et capable de coulisser par rapport au bac de germination 1.

Le dispositif de retournement et de déchargement 33 comprend un organe de déchargement 37 à vis dans fin 39. L'organe de déchargement est supporté par le pont roulant 35 par l'intermédiaire d'une tringlerie, comprenant ici trois bras articulés 41.

Chaque bras articulé 41 est réalisé sous la forme d'un pantographe qui peut prendre une position repliée, dans laquelle l'organe de déchargement 37 se trouve à proximité du pont roulant 35, et une position dépliée, dans laquelle l'organe de déchargement 37 se trouve en affleurement du plancher 3. Les bras articulés 41 sont actionnés par des vérins commandés simultanément. Chaque bras articulé 41 se trouve alors mécaniquement bloqué en position dépliée, sans effet des vérins utilisés pour l'actionnement, en sorte qu'une bonne rigidité est ainsi assurée. Ceci est important du fait que l'organe de déchargement est ici suspendu uniquement par les trois bras articulés 41.

Le déblocage des bras articulés 41 est réalisé par un effet de traction d'un câble, actionné par vérin, sur l'une des portions, ici la portion proche de l'organe de déchargement, des bras articulés 41. Ici, chaque bras articulé 41 est réalisé en deux parties, une partie supérieure 41A, reliée au pont roulant, et une partie inférieure 41B, reliée à l'organe de déchargement. Chaque partie d'un bras articulé 41 est réalisée sous la forme de deux barres disposées parallèlement entre elles et assemblées rigidement par une ou plusieurs traverses.

La vis sans fin 39 de l'organe de déchargement 37 présente une longueur voisine de la largeur du bac de germination 1. Plus précisément, cette vis sans fin 39 présente une longueur sensiblement supérieure à la largeur du plancher 3 de laquelle est déduite la largeur d'un panneau basculant 19.

Lorsque la vis sans fin 39 est mise en rotation, elle provoque un déplacement du grain en direction de l'un des panneaux basculants 19 du bord longitudinal 20 du plancher 3. Et ceci quelle que soit la position du pont roulant 35 par rapport au bac de germination 1, car des panneaux basculants 19 sont disposés sur l'ensemble de la longueur de ce bac de germination 1. Autrement dit, un panneau basculant 19 se trouve toujours sous la vis sans fin 39 de l'organe de déchargement 37, quelle que soit la position de ce dernier.

Lorsque le panneau basculant 19 correspondant est en position basculée, ou ouverte, la rotation de la vis sans fin 39 fait tomber du grain dans le dispositif de transport prévu sous ce panneau. Sur la largeur du bac de germination 1, la quasi totalité du grain qui s'y trouve peut ainsi être déchargée, du fait de l'action combinée de la vis dans fin 39 et des panneaux basculants 19 du bord longitudinal 20.

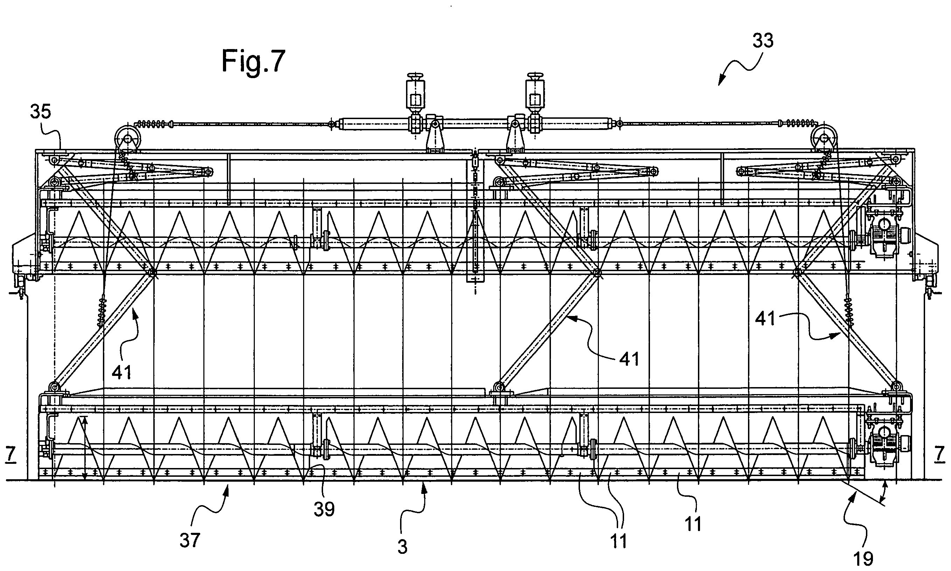

Dans cette configuration du germoir, la vis sans fin 39 peut être prévue d'une longueur sensiblement inférieure à la largeur du bac de germination 1, ce qui permet, comme le montre plus particulièrement la figure 7, de disposer, par exemple, un bloc moteur 43 pour la mise en rotation de la vis sans fin 39 dans l'axe de cette dernière. La conception du dispositif de déchargement 37 s'en trouve simplifiée. La longueur d'une dalle peut être choisie en fonction de l'encombrement du bloc moteur, c'est-à-dire en faisant en sorte qu'une dalle corresponde en largeur à ce bloc moteur.

Le coulissement du pont roulant 35 suivant la direction longitudinale du bac de germination 1 permet de décharger pratiquement l'ensemble du grain germé présent dans ce bac.

Cependant, le déchargement du grain au voisinage des parois transversale 5 du bac de germination 1 nécessite des dispositions supplémentaires.

Comme le grain en cours de germination nécessite un retournement régulier, le pont roulant 35 supporte également un organe de retournement de grain 45 présentant une pluralité de vis sans fin 47, disposées verticalement, les unes à côté des autres suivant toute la largeur du germoir.

L'organe de retournement de grain se trouve disposé de manière adjacente à la vis sans fin 39 de l'organe de déchargement selon la direction transversale du germoir.

Bien que cela ne soit pas représenté sur les figures, chacune des parois transversales 5 est conformée de manière à présenter une succession de niches, chaque niche étant agencée pour loger au moins partiellement une vis sans fin 47. Chacune des niches présente une forme demi-cylindrique de section transversale circulaire. Ceci permet de retourner l'ensemble du grain, y compris le grain en cours de germination présent à proximité des parois transversales 5, et d'éviter la formation de mottes solides qui peuvent engendrer des blocages dans la suite du processus. Sur l'une des parois transversales 5, le retournement du grain présente dans les niches implique la levée du dispositif de déchargement pour que ce dernier passe au-dessus de la paroi transversale en question.

Le grain présent dans les niches ne peut être déchargé par l'organe de déchargement 37. Ce grain peut cependant être déchargé en commandant le basculement des panneaux basculants du premier bord transversal 21 et du second bord transversal 22, lesquels sont disposés en correspondances de ces niches, c'est-à-dire sous celles-ci.

Le germoir selon l'invention comprend un plancher 3 présentant un bord longitudinal 20 basculant par parties ainsi que deux bords transversaux 21 et 22 également basculants par parties. Ces éléments basculants sont disposés de telle manière que tout élément mobile utilisé pour le retournement ou l'évacuation du grain se retrouve, en fin de course, au-dessus de l'un des ces éléments basculants. Ceci permet l'évacuation de l'ensemble du grain germé hors de la cuve de germination.

Ceci évite, ou du moins réduit au minimum, l'intervention d'opérateurs humains pour cette tâche. Ceci évite également la rétention de grain dans la cuve de germination 1.

L'intérêt du germoir selon l'invention n'est pas limité à réduction des opération de balayage. Du fait d'un processus de production par lots, il n'est pas possible de pratiquer un nettoyage de la cuve de germination 1 n'importe quand. En pratique, un tel nettoyage n'est possible qu'à la fin de la production d'un lot. Par exemple, la production d'un lot peut prendre six jours, durée pendant laquelle des moisissures peuvent apparaître dans la cuve de germination. Le germoir selon l'invention trouve donc là un intérêt particulier, car l'évacuation de l'ensemble du grain réduit le risque d'apparition de moisissures.

## Revendications

1. Germoir du type comprenant un bac de germination (1), comprenant un plancher surélevé (3) de forme rectangulaire et des parois latérales, longitudinales (7) et transversales (5), entourant le plancher surélevé (3), et un dispositif de déchargement 33 du grain, **caractérisé en ce que** le dispositif déchargement 33 comprend au moins un premier organe de transport (37) à vis sans fin (39) pour le grain en affleurement du dessus du plancher surélevé (3), que le plancher surélevé (3) présente une ou plusieurs portions à basculement commandable (19), reliées chacune à au moins une portion fixe du plancher surélevé (3) par des moyens de pivotement actionnables (23;25;27;29;31), au moins une portion à basculement commandable étant partiellement disposée sous la vis sans fin (39) du premier organe de transport (37), tandis que le dispositif de déchargement (37) comprend en outre au moins un second organe de transport pour le grain (30), disposé sous cette portion à basculement commandable (19), et **en ce qu'**une ou plusieurs des portions à basculement commandable (19) sont prévues le long de chacune des parois latérales transversales (5) et le long de l'une au moins des parois latérales longitudinales (7).

2. Germoir selon la revendication 1, dans lequel le premier organe de transport (37) est à positionnement variable par rapport au bac de germination (1), et dans lequel le plancher surélevé (3) présente pour chacune des positions relative du premier organe de transport (37) au moins une portion à basculement commandable (19) disposée sous la vis sans fin (39) de ce premier organe (37).

3. Germoir selon la revendication 2, dans lequel le premier organe de transport (37) est supporté avec possibilité de coulissement par rapport au bac de germination (1).

4. Germoir selon l'une des revendications 2 et 3, dans lequel au moins un second organe de transport (30, 32) est disposé sous chaque portion à basculement commandable (19).

5. Germoir selon l'une des revendications précédentes, dans lequel la vis sans fin (39) du premier organe de transport (37) est disposée suivant une direction transversale de ce plancher surélevé (3), et dans lequel l'une au moins des portions à basculement commandable (19) est adjacente à une paroi latérale (5,7) du bac de germination (1).

6. Germoir selon l'une des revendications précédentes, dans lequel le dispositif de déchargement (37) comprend un troisième organe de transport de grain (32, 30), disposé sous la portion à basculement commandable supplémentaire (19).

7. Germoir selon l'une des revendications précédentes, dans lequel le plancher surélevé (3) comprend une pluralité d'éléments de plancher formant dalles (11), et dans lequel chaque portion à basculement commandable (19) est également conformée en une dalle de plancher.

8. Germoir selon l'une des revendications précédentes, dans lequel les moyens de pivotement actionnables comprennent un vérin à actionnement commandable (29), une liaison pivot (23) entre la portion à basculement commandable (19, 21) et une partie fixe (11) du plancher surélevé (3), et une bielle (25) montée entre ledit vérin (29) et la portion à basculement commandable (19) .

9. Germoir selon l'une des revendications précédentes, dans lequel l'un au moins du second organe de transport (32) et du troisième organe de transport (32) est intégralement logé dans un étui (32A) profilé de manière aérodynamique.

10. Germoir selon l'une des revendications précédentes, dans lequel ledit étui est profilé vis à vis d'un flux d'air destiné à être soufflé sous le plancher surélevé (3) et sur la longueur de ce plancher surélevé (3).

11. Germoir selon l'une des revendications précédentes, dans lequel le premier organe de transport (37) comprend une vis sans fin (39) qui est suspendue à un pont roulant (35) par l'intermédiaire d'une structure de pantographe verrouillable.

12. Germoir selon la revendication 11, dans lequel ladite structure de pantographe verrouillable comprend au moins deux bras articulés (41) , chacun de ces bras articulés (41) étant fixé avec possibilité de pivotement à ces extrémités avec le pont roulant (35) d'une part et avec la vis sans vis (39) d'autre part.

13. Germoir selon l'une des revendications précédentes comprenant en outre un organe de retournement de grain (45) comportant une ou plusieurs vis sans fin (47), s'étendant verticalement du plancher (3) à une structure de suspension (35) mobile par rapport à la cuve de germination (1).

14. Germoir selon la revendication 13, dans lequel la cuve de germination présente une allure généralement rectangulaire, dans lequel l'organe de retournement de grain présente une pluralité de vis sans fin (47) disposés alignées et également réparties sur l'ensemble de la largeur de la cuve de germination (1), dans lequel des parois latérales transversales (5) de la cuve de germination (1) présentent respectivement des niches agencées de manière à loger au moins partiellement chacune des vis sans fin (47), et dans lequel une portion à basculement commandable (19) est disposée sous chacune des niches.

## Patentansprüche

1. Keimkasten vom Typ, der einen Keimbehälter (1) umfasst, umfassend einen erhöhten Boden (3) mit rechteckiger Form und mit lateralen, longitudinalen (7) und transversalen (5) Wänden, die den erhöhten Boden (3) umgeben, und eine Vorrichtung (33) zur Ausbringung von Getreide, **dadurch gekennzeichnet, dass** die Ausbringungsvorrichtung (33) mindestens ein erstes Transportelement (37) mit einer Schnecke (39) für das Getreide fluchtend mit der Oberseite des erhöhten Bodens (3) umfasst, dadurch, dass der erhöhte Boden (3) einen oder mehrere steuerbare Kippabschnitte (19) aufweist, die jeweils mit mindestens einem festen Abschnitt des erhöhten Bodens (3) durch betätigbare Schwenkmittel (23; 25; 27; 29; 31) verbunden sind, wobei mindestens ein steuerbarer Kippabschnitt teilweise unter der Schnecke (39) des ersten Transportelements (37) angeordnet ist, während die Ausbringungsvorrichtung (33) ferner mindestens ein zweites Transportelement für das Getreide (30) umfasst, das unter diesem steuerbaren Schwenkabschnitt (19) angeordnet ist, und dadurch, dass einer oder mehrere der steuerbareren Kippabschnitte (19) entlang jeder der lateralen transversalen Wände (5) und entlang mindestens einer der lateralen longitudinalen Wände (7) vorgesehen sind.

2. Keimkasten nach Anspruch 1, wobei das erste Transportelement (37) eine variable Positionierung in Bezug auf den Keimbehälter (1) aufweist, und wobei der erhöhte Boden (3) für jede der Positionen relativ zu dem ersten Transportelement (37) mindestens einen steuerbaren Kippabschnitt (19) aufweist, der unter der Schnecke (39) dieses ersten Elements (37) angeordnet ist.

3. Keimkasten nach Anspruch 2, wobei das erste Transportelement (37) mit der Möglichkeit eines Gleitens in Bezug auf den Keimbehälter (1) gelagert ist.

4. Keimkasten nach einem der Ansprüche 2 und 3, wobei mindestens ein zweites Transportelement (30, 32) unter jedem steuerbaren Kippabschnitt (19) angeordnet ist.

5. Keimkasten nach einem der vorhergehenden Ansprüche, wobei die Schnecke (39) des ersten Transportelements (37) in einer transversalen Richtung dieses erhöhten Bodens (3) angeordnet ist, und wobei mindestens einer der steuerbaren Kippabschnitte (19) an eine laterale Wand (5, 7) des Keimbehälters (1) angrenzt.

6. Keimkasten nach einem der vorhergehenden Ansprüche, wobei die Ausbringungsvorrichtung (37) ein drittes Transportelement (32, 30) für Getreide umfasst, das unter dem ergänzenden steuerbaren Kippabschnitt (19) angeordnet ist.

7. Keimkasten nach einem der vorhergehenden Ansprüche, wobei der erhöhte Boden (3) mehrere Bodenelemente umfasst, die Platten (11) bilden, und wobei jeder steuerbare Kippabschnitt (19) auch als Bodenplatte geformt ist.

8. Keimkasten nach einem der vorhergehenden Ansprüche, wobei die betätigbaren Schwenkmittel ein Stellglied (29) mit steuerbarer Betätigung, eine Schwenkverbindung (23) zwischen dem steuerbaren Kippabschnitt (19, 21) und einem festen Abschnitt (11) des erhöhten Bodens (3), und eine Pleuelstange (25), die zwischen dem Stellglied (29) und dem steuerbaren Kippabschnitt (19) montiert ist, umfassen.

9. Keimkasten nach einem der vorhergehenden Ansprüche, wobei mindestens eines von dem zweiten Transportelement (32) und dem dritten Transportelement (32) vollständig in einer Hülle (32A) aufgenommen ist, die aerodynamisch profiliert ist.

10. Keimkasten nach einem der vorhergehenden Ansprüche, wobei die Hülle gegenüber einem Luftstrom profiliert ist, der dazu bestimmt ist, unter den erhöhten Boden (3) und über die Länge dieses erhöhten Bodens (3) geblasen zu werden.

11. Keimkasten nach einem der vorhergehenden Ansprüche, wobei das erste Transportelement (37) eine Schnecke (39) aufweist, die an einer Laufbrücke (35) mittels einer Struktur eines verriegelbaren Pantographen aufgehängt ist.

12. Keimkasten nach Anspruch 11, wobei die Struktur des verriegelbaren Panthographen mindestens zwei Gelenkarme (41) umfasst, wobei jeder dieser Gelenkarme (41) mit der Möglichkeit eines Schwenkens an diesen Enden mit der Laufbrücke (35) einerseits und mit der Schnecke (39) andererseits befestigt ist.

13. Keimkasten nach einem der vorhergehenden Ansprüche, ferner umfassend ein Rückführelement (45) für Getreide, umfassend eine oder mehrere Schnecken (47), welche sich vertikal von dem Boden (3) zu einer Aufhängungsstruktur (35) erstrecken, die in Bezug auf das Keimgefäß (1) beweglich ist.

14. Keimkasten nach Anspruch 13, wobei das Keimgefäß ein im Wesentlichen rechteckiges Aussehen hat, wobei das Rückführelement für Getreide mehrere Schnecken (47) aufweist, die ausgerichtet und auch verteilt über die gesamte Breite des Keimgefäßes (1) angeordnet sind, wobei die lateralen transversalen Wände (5) des Keimgefäßes (1) jeweils Nischen aufweisen, die eingerichtet sind, mindestens teilweise jede der Schnecken (47) zu lagern, und wobei ein steuerbarer Kippabschnitt (19) unter jeder der Nischen angeordnet ist.

## Claims

1. Germinator of the type comprising a germination container (1), comprising a raised floor (3) of rectangular form and longitudinal lateral walls (7) and transverse lateral walls (5) which surround the raised floor (3), and a grain unloading device (33), **characterised in that** the unloading device (33) comprises at least one first transport member (37) with an endless screw (39) for the grain in alignment with the upper portion of the raised floor (3), **in that** the raised floor (3) has one or more controllable tilting portions (19) which are each connected to at least one fixed portion of the raised floor (3) by actuatable pivoting means (23;25;27;29;31), at least one controllable tilting portion being partially arranged below the endless screw (39) of the first transport member (37), whilst the unloading device (37) further comprises at least one second transport member (30) for the grain which is arranged below this controllable tilting portion (19), and **in that** one or more of the controllable tilting portions (19) is/are provided along each of the transverse lateral walls (5) and along at least one of the longitudinal lateral walls (7).

2. Germinator according to claim 1, wherein the first transport member (37) has variable positioning relative to the germination container (1), and wherein the raised floor (3) has for each of the relative positions of the first transport member (37) at least one controllable tilting portion (19) which is arranged below the endless screw (39) of this first member (37).

3. Germinator according to claim 2, wherein the first transport member (37) is supported with the possibility of sliding relative to the germination container (1).

4. Germinator according to either claim 2 or claim 3, wherein at least one second transport member (30, 32) is arranged below each controllable tilting portion (19).

5. Germinator according to any one of the preceding claims, wherein the endless screw (39) of the first transport member (37) is arranged in accordance with a transverse direction of this raised floor (3), and wherein at least one of the controllable tilting portions (19) is adjacent to a lateral wall (5, 7) of the germination container (1).

6. Germinator according to any one of the preceding claims, wherein the unloading device (37) comprises a third grain transport member (32, 30) which is arranged below the additional controllable tilting portion (19).

7. Germinator according to any one of the preceding claims, wherein the raised floor (3) comprises a plurality of floor elements which form slabs (11), and wherein each controllable tilting portion (19) is also shaped to form a floor slab.

8. Germinator according to any one of the preceding claims, wherein the actuatable pivoting means comprise an actuator (29) with controllable actuation, a pivot connection (23) between the controllable tilting portion (19, 21) and a fixed portion (11) of the raised floor (3), and a connection rod (25) which is mounted between the actuator (29) and the controllable tilting portion (19).

9. Germinator according to any one of the preceding claims, wherein at least one of the second transport member (32) and the third transport member (32) is integrally received in a casing (32A) which is profiled in an aerodynamic manner.

10. Germinator according to any one of the preceding claims, wherein the casing is profiled with respect to an air flow which is intended to be blown under the raised floor (3) and over the length of this raised floor (3).

11. Germinator according to any one of the preceding claims, wherein the first transport member (37) comprises an endless screw (39) which is suspended on a bridge crane (35) by means of a lockable pantograph structure.

12. Germinator according to claim 11, wherein the lockable pantograph structure comprises at least two articulated arms (41), each of these articulated arms (41) being fixed with the possibility of pivoting at these ends to the bridge crane (35), on the one hand, and to the endless screw (39), on the other hand.

13. Germinator according to any one of the preceding claims, further comprising a grain turning member (45) which comprises one or more endless screws (47), which extend vertically from the floor (3) to a suspension structure (35) which can be moved relative to the germination container (1).

14. Germinator according to claim 13, wherein the germination container has a generally rectangular appearance, wherein the grain turning member has a plurality of endless screws (47) which are arranged in alignment and also distributed over the whole width of the germination container (1), wherein transverse lateral walls (5) of the germination container (1) have niches which are arranged so as to receive at least partially each of the endless screws (47), respectively, and wherein a controllable tilting portion (19) is arranged below each of the niches.
